Europäisches Patentamt

European Patent Office

Office européen des brevets

(19)

(11) Publication number: **0 119 739**
**B1**

(12) # EUROPEAN PATENT SPECIFICATION

(45) Date of publication of patent specification: 06.05.87

(51) Int. Cl.⁴: **H 04 N 5/14**

(21) Application number: **84300980.4**

(22) Date of filing: **15.02.84**

(54) Video signal inverting circuits.

(30) Priority: **16.02.83 JP 23995/83**

(43) Date of publication of application:
**26.09.84 Bulletin 84/39**

(45) Publication of the grant of the patent:
**06.05.87 Bulletin 87/19**

(84) Designated Contracting States:
**DE FR GB NL**

(56) References cited:

**Patent Abstracts of Japan, vol. 7, no. 40, 17
February 1983**

(73) Proprietor: **SONY CORPORATION**
**7-35 Kitashinagawa 6-Chome Shinagawa-ku
Tokyo 141 (JP)**

(72) Inventor: **Isogawa, Toshiaki c/o Sony
Corporation
7-35 Kitashinagawa 6-chome
Shinagawa-ku Tokyo (JP)**
Inventor: **Shiono, Ryuji c/o Sony Corporation
7-35 Kitashinagawa 6-chome
Shinagawa-ku Tokyo (JP)**
Inventor: **Niimura, Tsutomu c/o Sony
Corporation
7-35 Kitashinagawa 6-chome
Shinagawa-ku Tokyo (JP)**
Inventor: **Sato, Joichi c/o Sony Corporation
7-35 Kitashinagawa 6-chome
Shinagawa-ku Tokyo (JP)**
Inventor: **Sato, Mitsuru c/o Sony Corporation
7-35 Kitashinagawa 6-chome
Shinagawa-ku Tokyo (JP)**

(74) Representative: **Cotter, Ivan John et al
D. YOUNG & CO. 10 Staple Inn
London WC1V 7RD (GB)**

Courier Press, Leamington Spa, England.

## Description

This invention relates to video signal inverting circuits.

If image information on a negative film is recorded on a video tape recorder (VTR), there is an advantage that, without printing the negative film on a printing medium such as paper, the image can be viewed at any time by using a television receiver.

Therefore, it has been proposed to pick up a negative film by means of a television camera and to record the video signal thereof on a VTR. Since the video signal which is provided by picking up the negative film is in a state in which the black and white levels of the video signal are inverted relative to the real object, the video signal should be recorded on the VTR after inversion of the polarity thereof by a video signal inverting circuit or "nega-posi" inverting circuit to be of normal polarity.

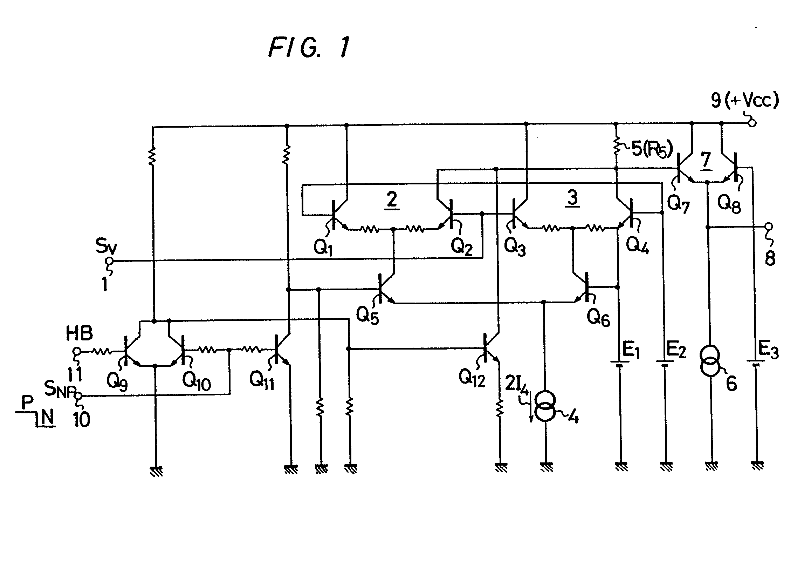

Figure 1 of the accompanying drawings shows a previously proposed video signal inverting circuit or nega-posi inverting circuit. In Figure 1, a reference numeral 1 designates an input terminal to which a video signal $S_V$ picked up or produced by, for example, a television camera, is supplied. The video input signal $S_V$ is supplied to the base of a transistor Q2, which constitutes a differential amplifier 2 together with a transistor Q1, and also to the base of a transistor Q3, which constitutes a differential amplifier 3 together with a transistor Q4. The differential amplifiers 2 and 3 are alternately changed over or selected between by switching transistors Q5 and Q6, connected differentially relative to a current source 4, depending on whether the circuit is to adopt a mode wherein, the video input signal $S_V$ being positive, the black and white levels thereof keep a normal polarity relationship therebetween and an output signal is derived with the same polarity as that of the input signal (hereinafter referred to as "the posi-mode"), or a mode wherein, the input video signal $S_V$ being positive, the polarity relationship between the black and white levels of the video signal is inverted and an output signal is derived with inverted polarity relative to the input signal (hereinafter referred to as the "nega-mode").

The collectors of the transistors Q2 and Q4 are connected together and the junction or connection point thereof is connected through a resistor 5 to a $+V_{CC}$ power source terminal 9. Accordingly, when the differential amplifier 2 is in operation, a video signal which is provided by inverting the incoming video signal $S_V$ in polarity appears at the connection point of the collectors of the transistors Q2 and Q4, whereas, when the differential amplifier 3 is in operation, a video signal which has the same polarity as that of the incoming video signal $S_V$ appears at the above connection point. The video signal thus appearing at the connection point of the collectors of the transistors Q2 and Q4 is then supplied to a differential amplifier 7 which is formed of transistors Q7 and Q8 connected differentially to a current source 6.

A video signal of the same polarity as that supplied to the differential amplifier 7 is obtained at an output terminal 8 led out from a common connection point of the emitters of the transistors Q7 and Q8.

A reference numeral 10 designates an input terminal to which a nega-mode/posi-mode switching signal $S_{NP}$ is applied. The nega-mode/posi-mode switching signal $S_{NP}$ is of a high level in the posi-mode and of low level in the nega-mode.

A reference numeral 11 designates an input terminal to which a horizontal blanking pulse HB is applied. The horizontal blanking pulse HB becomes of low level during a horizontal blanking period $T_{HB}$. The horizontal blanking pulse HB is supplied to a base of a transistor Q9 which is connected differentially to a transistor Q10. The switching signal $S_{NP}$ from the input terminal 10 is supplied to a base of the transistor Q10 and also to a base of a transistor Q11. A collector of the transistor Q11 is connected to a base of the transistor Q5.

Consequently, in the posi-mode, in which the switching signal $S_{NP}$ becomes of high level, the transistors Q10 and Q11 are turned on and the collectors thereof thus become of low level in potential. As a result, the transistor Q5 is turned off and the transistor Q6 is turned on so that the differential amplifier 3 becomes operative. Thus, an output video signal of the same polarity as that of the incoming video signal $S_V$ appears at the output terminal 8.

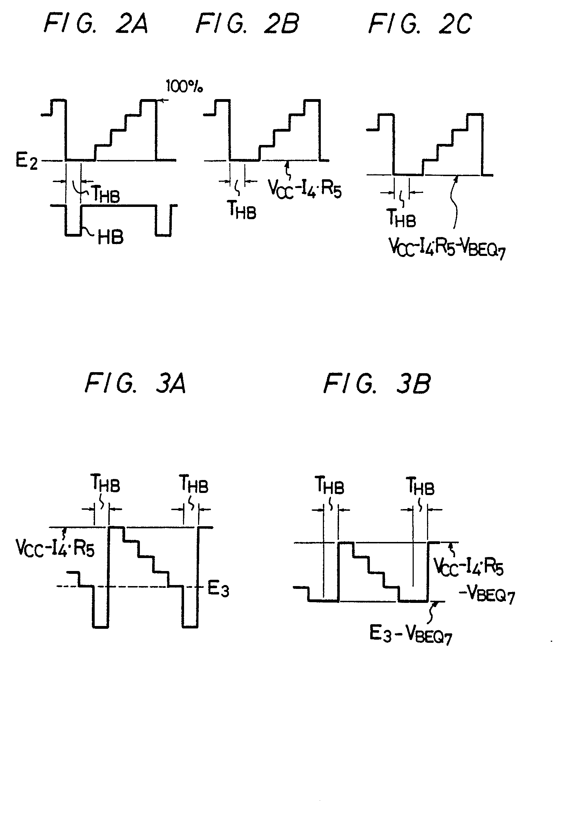

Consider now the case when, at this time, a video signal having a pedestal level E2 as shown in Figure 2A is supplied to the input terminal 1. If the comparing reference voltage of the differential amplifiers 2 and 3 is taken as E2, the current value of the current source 4 is taken as $2I_4$ and the resistance value of the resistor 5 is taken as $R_5$, the output video signal of the differential amplifier 3 obtained at the collector of the transistor Q4 is a video signal having the same polarity as that of the incoming video signal $S_V$ and having a pedestal level which is expressed as $V_{CC} - I_4 \cdot R_5$ ($V_{CC}$ is the power source voltage) as shown in Figure 2B. Accordingly, the output video signal obtained at the output terminal 8 is of the same polarity as that of the incoming video signal $S_V$ and has a pedestal level which is given by $(V_{CC} - I_4 \cdot R_5 - V_{BEQ7})$ as shown in Figure 2C.

Although the horizontal blanking pulse HB of the incoming video signal $S_V$ is supplied through the input terminal 11 to the base of the transistor Q9, the transistor Q9 is in the off-state in the posi-mode so that the switching relationship is not affected at all. Moreover, in the posi-mode, a comparing reference voltage E3 is set in such a manner that the base potential of the transistor Q8 is always lower than the base potential of the transistor Q7 in the differential amplifier 7.

In the nega-mode, in which the switching signal $S_{NP}$ becomes of low level, the transistor Q11 is turned off so that the transistor Q5 turns on and the transistor Q6 therefore turns off. Thus, the differential amplifier 2 becomes operative to apply to the base of the transistor Q7 a video signal which is provided by inverting the incoming video signal $S_V$ in polarity. In the nega-mode, the transistor Q9 is turned on so that, in response to the horizontal blanking pulse HB supplied to the base thereof, a transistor Q12 connected between the common connection point of the collectors of the transistors Q2 and Q4 of the differential amplifiers 2 and 3 and ground is turned off when the pulse HB is of high level and turned on when the pulse HB is of low level. Therefore, the differential amplifier 2 supplies an output signal in which a pulse of the same polarity as that of the pulse HB is superimposed on the incoming video signal. More particularly, if the incoming video signal $S_V$ is the signal as shown in Figure 2A, the video signal supplied to the base of the transistor Q7 of the differential amplifier 7 is as shown in Figure 3A, wherein the incoming video signal is inverted in polarity with the potential $(V_{CC}-I_4 \cdot R_5)$ as the centre, and the pulse of the same polarity as that of the pulse HB is superimposed thereon during the period $T_{HB}$ and becomes lower than the reference voltage E3. As is clear from Figure 3A, the reference voltage E3 is selected to be of the same potential as that of the portion of the original signal corresponding to 100% white level when the signal is inverted in polarity as described above.

Then, at the output terminal 8 there is obtained an output video signal having a pedestal level of $E3-V_{BEQ7}$ and a 100% white level of $(V_{CC}-I_4 \cdot R_5-V_{BEQ7})$ as shown in Figure 3B, when the output video signal is regarded as a video signal of normal polarity.

As described above, the polarity of the input video signal is inverted in the nega-mode. As is clear from the above description, in the previously proposed video signal inverting circuit the pedestal level of the output video signal is changed as between the posi-mode and nega-mode. Therefore, in order that the pedestal levels of the video signal in the nega-mode and posi-mode may coincide with each other before the video signal is supplied to a video processing circuit provided on the output side of the video signal inverting circuit, the previously proposed video signal inverting circuit requires an additional clamp circuit to make the pedestal levels equal to a predetermined level. This additional clamp circuit causes a problem of the follow-up property of the clamp operation when the polarity of the input signal is changed in the nega-mode and the posi-mode.

According to the present invention there is provided a video signal inverting circuit characterised by:

a video input terminal for receiving an incoming video signal;

a phase splitter connected to the video input terminal;

a switching circuit connected to the phase splitter for selecting either a non-inverted incoming video signal or an inverted incoming video signal supplied through the phase splitter based on a polarity control signal; and

first and second *dc* level setting circuits connected to the switching circuit for selectively setting a *dc* level of an output video signal obtained through the switching circuit based on the polarity control signal.

A preferred embodiment of the present invention described hereinbelow provides an improved video signal inverting circuit in which the above defects inherent in the previously proposed video signal inverting circuit are removed or at least alleviated. Specifically, the pedestal level of an output video signal is fixed regardless of the selection of nega-mode or posi-mode. The preferred video signal inverting circuit does not require a clamp circuit and is free from the problem of follow-up property caused by the selection of nega-mode and posi-mode. The preferred video signal inverting circuit is suitable for use in a video tape recorder.

The invention will now be further described, by way of illustrative and non-limiting example, with reference to the accompanying drawings, in which like references designate like elements and parts throughout, and in which:

Figure 1 is a circuit diagram showing a previously proposed video signal inverting circuit;

Figures 2A to 2C, 3A and 3B are respective signal waveform diagrams useful for understanding the operation of the circuit of Figure 1;

Figure 4 is a circuit diagram showing a video signal inverting circuit embodying the present invention; and

Figures 5A, 5B and 6A, 6B are respective signal waveform diagrams useful for understanding the operation of the circuit of Figure 4.

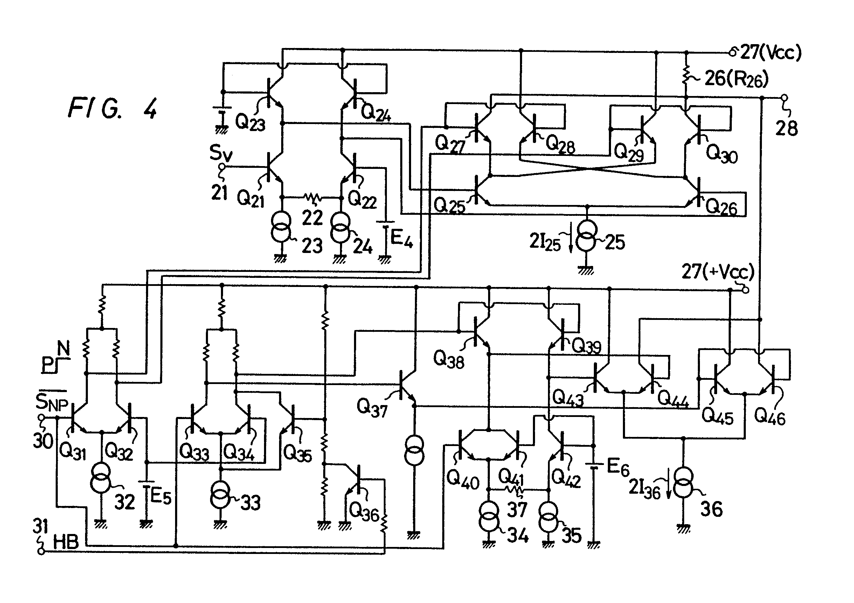

A video signal inverting circuit embodying the present invention will now be described with reference to Figures 4 to 6B.

Figure 4 is a circuit diagram showing the video signal inverting circuit embodying the present invention. In Figure 4, a reference numeral 21 designates an input terminal to which an incoming video signal $S_V$ is applied. The incoming video signal $S_V$ is then supplied to a base of a transistor Q21 which constitutes a differential amplifier together with a transistor Q22. Emitters of the transistors Q21 and Q22 are connected together through a resistor 22 and are also grounded through respective current sources 23 and 24. A reference voltage E4, which is equal to the pedestal level of the input video signal $S_V$, is supplied to a base of the transistor Q22. Collectors of the transistors Q21 and Q22 are connected to current-to-voltage converting transistors Q23 and Q24, respectively, and bases of the transistors Q23 and Q24 are supplied with the same reference voltage.

Video signals obtained at the collectors of the transistors Q21 and Q22 are supplied to bases of transistors Q25 and Q26, respectively. The transistors Q25 and Q26 are connected differentially to a current source 25. Collectors of the transistors Q25 and Q26 are connected to two pairs of transistors Q27, Q28 and Q29, Q30, respectively, each such pair of transistors being connected differentially. A collector of the transistor Q27, which is of the same polarity as the incoming video signal $S_V$ applied to the input terminal 21, is connected to the collector of the transistor Q30, which is of a polarity opposite thereto. The connection point between the collectors of the transistors Q27 and Q30 is connected via a load resistor 26 to a $+V_{CC}$ power source terminal 27, and is led out to an output terminal 28.

The pairs of transistors Q27, Q28 and Q29, Q30 are selected in response to selection of the posi-mode or nega-mode. A reference numeral 30 designates an input terminal to which a nega-mode/posi-mode switching signal is applied. In this embodiment, the switching signal supplied to the input terminal 30 is of polarity opposite to that in Figure 1, namely the inverted switching signal $\overline{S_{NP}}$ is of low level in the posi-mode and of high level in the nega-mode.

The switching signal $\overline{S_{NP}}$ is supplied to a base of a transistor Q31 which constitutes a differential amplifier together with a transistor Q32. The transistors Q31 and Q32 are connected differentially to a current source 32. A collector of the transistor Q31 is connected to the bases of the pair of transistors Q27 and Q28, while a collector of the transistor Q32 is connected to the bases of the pair of the transistors Q29 and Q30. Thus, the pairs of transistors Q27, Q28 and Q29, Q30 are selected in response to selection of the nega-mode or posi-mode. Namely, in the posi-mode, since the switching signal $\overline{S_{NP}}$ is of low level, the base potential of the transistor Q31 is lower than a reference voltage E5, which is the base potential of the transistor Q32, so that the transistor Q31 is turned off while the transistor Q32 is turned on. Consequently, the base potentials of the pair of transistors Q27 and Q28 become of high level and the transistors Q27 and Q28 are therefore turned on. Therefore, a video signal having the polarity of the incoming video signal $S_V$ delivered to the output terminal 28.

At this time, the potential relationship of the output video signal is determined as follows.

The switching signal $\overline{S_{NP}}$ from the input terminal 30 is also supplied to a base of a transistor Q33 which constitutes a differential amplifier together with a transistor Q34. The transistors Q33 and Q34 are connected differentially to a current source 33. Since the reference voltage E5 is applied to the base of the transistor Q34 in the posi-mode, the transistor Q33 is turned off while the transistor Q34 is turned on. Thus, the collector potential of the transistor Q33 becomes of high level so that an emitter-follower transistor Q37 connected to the collector of the transistor Q33 is turned on. The emitter output of the transistor Q37 is supplied to bases of a pair of transistors Q45 and Q46 to turn them on. The pair of transistors Q45 and Q46 are connected differentially to another pair of transistors Q43 and Q44 with respect to a current source 36. In addition, collectors of the transistors Q44 and Q46 are connected together and the connection point thereof is connected to the connection point between the resistor 26 and the output terminal 28.

The switching signal $\overline{S_{NP}}$ from the terminal 30 is supplied further to the base of a transistor Q40 which is connected differentially to transistors Q41 and Q42, the bases of which are supplied in common with a predetermined voltage E6. To be more specific, the emitters and collectors of the transistors Q40 and Q41 are connected together, respectively, and the connection point of the emitters thereof is grounded through a current source 34. The emitter of the transistor Q42 is grounded through a current source 35 and a resistor 37 is interposed between the emitter of the transistor Q42 and the connection point of the emitters of the transistors Q40 and Q41. The collector connection point of the transistors Q40 and Q41 and the collector of the transistor Q42 are provided with current-to-voltage converting transistors Q38 and Q39, respectively. The collector potential of the transistor Q34 is applied equally to the bases of the transistors Q38 and Q39. The potential at the collector connection point of the transistors Q40 and Q41 and the potential at the collector of the transistor Q42 are applied to the bases of the transistors Q43 and Q44, respectively. The transistors Q43 and Q44 are connected differentially.

In the posi-mode, as mentioned before, since the transistor Q34 is turned on, its collector potential is of low level and the transistors Q38 and Q39 are thereby turned off. Thus, the differential pair of transistors Q43 and Q44 are also turned off.

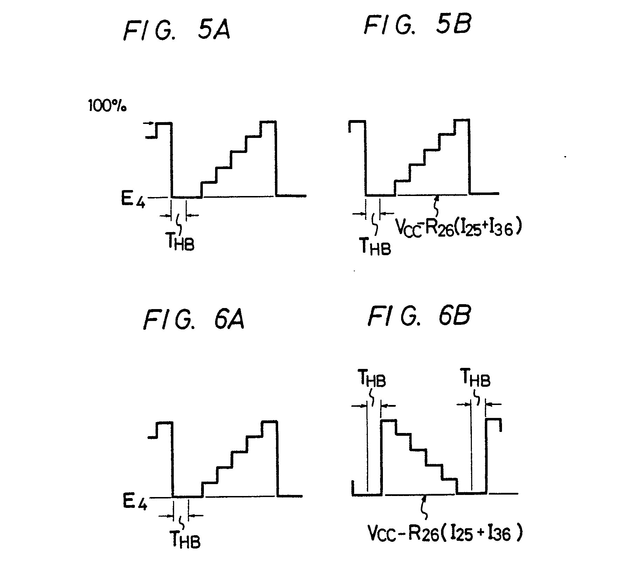

Based on the facts described above, in the posi-mode the pair of transistors Q27 and Q28 and the pair of transistors Q45 and Q46 are selected and turned on. Accordingly, when an incoming video signal $S_V$ as shown in Figure 5A is applied to the input terminal 21, at the output terminal 28 there is developed an output video signal shown in Figure 5B which has a polarity the same as that of the incoming video signal $S_V$ and a pedestal level which can be expressed as

$$V_{CC} - R_{26}(I_{25} + I_{36}) \qquad (a)$$

where the current values of the current sources 25, 36 are taken as $2I_{25}$, $2I_{36}$, respectively, and the resistance value of the resistor 26 is taken as $R_{26}$.

In the posi-mode, in similar manner to the previously proposed circuit shown in Figure 1, a horizontal synchronizing pulse HB which becomes of low level during the horizontal blanking period $T_{HB}$ is supplied to the base of the transistor Q36 through a terminal 31. As a result, in the posi-mode, during the horizontal blanking period $T_{HB}$, although instead of the transistor Q34 (which forms a differential pair together with the transistor Q33) the transistor Q35 (the collector and emitter of which are respectively connected to those of the transistor Q34) is turned on, this does not concern the above-described switching operations at all.

In the nega-mode, since the switching signal $\overline{S_{NP}}$ becomes of a high level which is higher than the voltage E5, the transistor Q31 is turned on while the transistor Q32 is turned off. Therefore, the collector potential of the transistor Q32 becomes of high level to turn on the pair of transistors Q29 and Q30. Accordingly, an output video signal having a polarity opposite to that of the incoming video signal $S_V$ is obtained at the output terminal 28.

In the nega-mode, except during the horizontal blanking perod $T_{HB}$, the transistor Q33 is turned on and the transistor Q34 is turned off so that the potential at the base of the transistor Q37 becomes lower than the potential at the bases of the transistors Q38 and Q39, the pair of transistors Q45 and Q46 thus being turned off. Since the transistor Q34 is turned off, its collector potential becomes of high level to select the pair of transistors Q38 and Q39, the bases of which are connected together. At this time, the switching signal $\overline{S_{NP}}$ is supplied through the input terminal 30 to the base of the transistor Q40. In the nega-mode, although the signal $\overline{S_{NP}}$ is of high level, the level of the signal $\overline{S_{NP}}$ is selected in such a manner that a potential difference between the potential at the base of the transistor Q40 and the base potential E6 of the transistor Q42 (which forms a differential pair together with the transistor Q40) becomes equal to the pedestal level of the output signal which is developed at the output terminal 28 in the nega-mode. Since the collector outputs of the transistors Q40 and Q42 are supplied to the bases of the transistors Q43 and Q44, respectively, which transistors are connected differentially to each other, the collector current of the transistor Q44 is reduced by an amount corresponding to the difference therebetween with respect to the collector current of the transistor Q43 to raise the collector potential of the transistor Q44. Thus, the output video signal developed at the output terminal 28, whose polarity is inverted with respect to that of the incoming video signal as shown in Figure 6A, is made to have a pedestal level which can be expressed by

$$V_{CC} - R_{26}(I_{25} + I_{36})$$

as shown in Figure 6B. Namely, the pedestal level of the above output video signal produced in the nega-mode is made equal to that of the output video signal developed at the output terminal 28 in the posi-mode.

During the horizontal blanking period $T_{HB}$, the base potential of the transistor Q36 to which the horizontal synchronizing pulse HB is supplied becomes of low level so that the transistor Q36 is thus turned off so that the transistor Q35 is turned on, while the transistor Q33 is turned off. Therefore, during the horizontal blanking period $T_{HB}$, the pair of transistors Q45 and Q46 are selected in similar manner to the posi-mode. When the pair of transistors Q43 and Q44 are not operated, the 100% white level of the inverted video signal becomes equal to the potential expressed by

$V_{CC} - R_{26}(I_{25} + I_{36})$. Also, during the horizontal blanking period $T_{HB}$, when the incoming video signal is inverted, the 100% white level is presented. Thus, the pedestal level in the horizontal blanking period $T_{HB}$ becomes equal to $V_{CC} - R_{26}(I_{25} + I_{36})$, which coincides with the pedestal level of the output video signal in the nega-mode.

As a result, the pedestal level of the output video signal developed at the output terminal 28 in the nega-mode becomes coincident with that of the output video signal in the posi-mode. Therefore, regardless of the mode, the pedestal level of the output video signal is fixed.

In consequence, in contrast to the previously proposed circuit of Figure 1, it is not necessary to provide at a rear stage of the video signal inverting circuit a clamp circuit by which the pedestal levels of the video signals in the nega-mode and posi-mode are made coincident with each other. Moreover, even when the pedestal level is clamped to the predetermined level, then, unlike the previously proposed circuit, a problem of follow-up property in the clamp circuit is never caused upon selecting the nega-mode and posi-mode. There is thus an advantage in that stable clamp operation can be carried out.

As set forth above, according to the circuit of Figure 4, the pedestal levels of the output video signal in the nega-mode and posi-mode are coincident with each other so that, unlike the previously proposed circuit of Figure 1, it is not necessary to provide a clamp circuit by which the pedestal levels of the output video signals in the nega-mode and posi-mode are made coincident with each other.

Furthermore, when the pedestal level is clamped to the predetermined level, if the pedestal level is different in nega-mode and posi-mode, the problem of follow-up property upon selecting the nega-mode and posi-mode becomes serious. However, the circuit of Figure 4 is free from such problem because the pedestal level is the same in the nega-mode and posi-mode.

Circuits embodying the invention may for example be used to invert the polarity of a video signal provided by taking a negative film by a television camera so as to invert the black and white levels thereof to provide a normal video signal.

**Claims**

1. A video signal inverting circuit characterised by:

a video input terminal (21) for receiving an incoming video signal ($S_V$);

a phase splitter connected to the video input terminal (21);

a switching circuit connected to the phase splitter for selecting either a non-inverting incoming video signal or an inverted incoming video signal supplied through the phase splitter based on a polarity control signal ($\overline{S_{NP}}$); and

first and second dc level setting circuits connected to the switching circuit for selectively setting a *dc* level of an output video signal obtained through the switching circuit based on the polarity control signal ($\overline{S_{NP}}$).

2. A video signal inverting circuit according to Claim 1, wherein the first *dc* level setting circuit is activated by the polarity control signal ($\overline{S_{NP}}$) when the non-inverted incoming video signal is selected and the second *dc* level setting circuit is activated by the polarity control signal ($\overline{S_{NP}}$) when the inverted incoming video signal is selected at the switching circuit.

3. A video signal inverting circuit according to Claim 2, wherein the first *dc* level setting circuit is intermittently activated instead of the second *dc* level setting circuit at each horizontal blanking interval ($T_{HB}$) during the time when the inverted incoming video signal is selected at the switching circuit by the polarity control signal ($\overline{S_{NP}}$).

**Patentansprüche**

1. Videosignal-Inversionsschaltung, gekennzeichnet durch

einen Videoeingangsanschluß (21) zum Empfang eines ankommenden Videosignals ($S_V$),

einen Phasenteiler, der mit dem Videoeingangsanschluß (21) verbunden ist,

eine Schalteinrichtung, die mit dem Phasenteiler verbunden ist, zum Auswählen entweder eines nichtinvertierten ankommenden Videosignals oder eines invertierten ankommenden Videosignals, das durch den Phasenteiler zugeführt ist, auf der Grundlage eines Polaritätssteuersignals ($\overline{S_{NP}}$), und eine erste und eine zweite Gleichpegel-Einstellschaltung, die mit der Schalteinrichtung verbunden sind, zum selektiven Einstellen eines Gleichpegels eines Ausgangsvideosignals, das über die Schalteinrichtung erhalten ist, auf der Grundlage des Polaritätssteuersignals ($\overline{S_{NP}}$).

2. Videosignal-Inversionsschaltung nach Anspruch 1, bei der die erste Gleichpegel-Einstellschaltung durch das Polaritätssteuersignal ($\overline{S_{NP}}$ aktiviert wird, wenn das nichtinvertierte ankommende Videosignal ausgewählt ist, und die zweite Gleichpegel-Einstellschaltung durch das Polaritätssteuersignal ($\overline{S_{NP}}$) aktiviert wird, wenn das invertierte ankommende Videosignal bei der Schalteinrichtung ausgewählt ist.

3. Videosignal-Inversionsschaltung nach Anspruch 2, bei der die erste Gleichpegel-Einstellschaltung anstelle der zweiten Gleichpegel-Einstellschaltung intermittierend bei jedem Horizontalaustastintervall ($T_{HB}$) während der Zeit aktiviert wird, zu der das invertierte ankommende Videosignal bei der Schalteinrichtung durch das Polaritätssteuersignal ($\overline{S_{NP}}$) ausgewählt ist.

**Revendications**

1. Circuit d'inversion de signaux vidéo, caractérisé par:

une borne d'entrée vidéo (21) pour recevoir un signal vidéo d'entrée ($S_V$);

un déphaseur connecté à la borne d'entrée vidéo (21);

un circuit de commutation connecté au déphaseur pour sélectionner un signal vidéo d'entrée non inversé ou un signal vidéo d'entrée inversé fournis par l'intermédiaire du déphaseur en fonction d'un signal de commande de polarité ($\overline{S_{NP}}$); et

des premier et second circuits de réglage de niveau de courant continu connectés au circuit de commutation pour régler sélectivement un niveau de courant continu d'un signal vidéo de sortie obtenu par l'intermédiaire du circuit de commutation en fonction du signal de commande de polarité ($\overline{S_{NP}}$).

2. Circuit d'inversion de signaux vidéo selon la revendication 1, dans lequel le premier circuit de réglage de niveau de courant continu est rendu actif par le signal de commande de polarité ($\overline{S_{NP}}$) quand le signal vidéo d'entrée non inversé est sélectionné et dans lequel le second circuit de réglage de niveau de courant continu est rendu actif par le signal de commande de polarité ($\overline{S_{NP}}$) quand le signal vidéo d'entrée inversé est sélectionné dans le circuit de commutation.

3. Circuit d'inversion de signaux vidéo selon la revendication 2, dans lequel le premier circuit de réglage de niveau de courant continu est rendu actif de façon intermittente à la place du second circuit de réglage de niveau de courant continu, à chaque intervalle de suppression de lignes ($T_{HB}$) pendant la période de temps où le signal vidéo d'entrée inversé est sélectionné dans le circuit de commutation par le signal de commande de polarité ($\overline{S_{NP}}$).

## FIG. 1

FIG. 2A    FIG. 2B    FIG. 2C

FIG. 3A    FIG. 3B

FIG. 4

## FIG. 5A

100%

$E_4$

$T_{HB}$

## FIG. 5B

$V_{CC}-R_{26}(I_{25}+I_{36})$

$T_{HB}$

## FIG. 6A

$E_4$

$T_{HB}$

## FIG. 6B

$T_{HB}$     $T_{HB}$

$V_{CC}-R_{26}(I_{25}+I_{36})$